# EUROPÄISCHE PATENTSCHRIFT

(11) **EP 0 988 510 B1**
(45) Veröffentlichungstag und Bekanntmachung des Hinweises auf die Patenterteilung: **24.09.2003**
(21) Anmeldenummer: 98928150.6
(22) Anmeldetag: 07.04.1998
(51) Int. Cl.: G01D 5/02, G01B 7/02, G01D 5/16

(54) **WEGSENSOR**
TRAVEL SENSOR
DETECTEUR DE COURSE

(30) Priorität: 10.06.1997 DE 19724387
(43) Veröffentlichungstag der Anmeldung: 29.03.2000
(73) Patentinhaber: ROBERT BOSCH GMBH, 70442 Stuttgart (DE)
(72) Erfinder: MOERBE, Matthias, D-74360 Ilsfeld (DE)
(86) Internationale Anmeldenummer: DE9800976
(87) Internationale Veröffentlichungsnummer: WO98057128

(56) Entgegenhaltungen:
- EP-A- 0 597 529
- DE-A- 19 506 938
- GB-A- 2 217 459
- US-A- 4 490 674

## Beschreibung

### Stand der Technik

Die Erfindung betrifft einen Wegsensor zur Detektiern eines absoluten Wertes eines Weges, bei dem eine Längsbewegung in eine Drehbewegung eines Sensorelements umsetzbar ist.

Bei einem aus der DE-OS 37 30 926 bekannten Wegsensor wird die Bewegung des Kolbens eines Zylinders, beispielsweise in der Steuereinrichtung für eine Hinterradlenkung eines Kraftfahrzeugs, erfaßt. Eine Verlängerung des Kolbens aus magnetisierbarem Material ragt hierzu in ein Zylinderrohr mit außen aufgewickelten Spulen und führt durch eine Bewegung zu einer induktiven Beeinflussung des Spulenstroms, der meßtechnisch ausgewertet werden kann.

Aus GB-A-2 217459 ist ein Rollband maß bekannt, bei dem die Bandbewegung mittels Hilfsrad und Zwischen-getriebe in die Drehung eines alternierend magnetisierten Meßrades umgesetzt wird. Außer dem beschreibt EP-A-0 597 529 einen Wegsensor, bei dem das Seil Potentiometer aufgewickelt wird.

### Vorteile der Erfindung

Ein Wegsensor ist mit den erfindungsgemäßen Merkmalen des Kennzeichens des unabhängigen Anspruchs 1 dadurch vorteilhaft, dass auf einfache Weise eine berührungslose Wegmessung realisiert werden kann, die leicht an unterschiedliche Weglängen anpassbar ist. Auch zur Erfassung längerer von einem mechanischen Bauelement zurückgelegter Wege, zum Beispiel vom Bremspedal eines Kraftfahrzeuges, kann durch die Umsetzung der Längsbewegung in eine Drehbewegung ein Wegsensor mit minimalem Bauraum aufgebaut werden.

Auf vorteilhafte Weise lässt sich die Umsetzung der Längsbewegung in eine Drehbewegung mit einem Bowdenzug erreichen. Am Umfang eines kreisförmigen, drehbaren Sensorelements mit einem darauf aufgebrachten Dauermagneten kann dieser Bowdenzug leicht auf- und abgewickelt werden. Eine eventuell notwendige Rückstellkraft für den Bowdenzug wird beispielsweise mit einer am Ende des Bowdenzugs und am Gehäuse des Wegsensors befestigten Feder, vorzugsweise einer Spiralfeder, erzeugt.

Bei einer vorteilhaften Ausführungsform kann auch eine Umdrehung des Sensormoduls in einem Winkel von größer 180° dadurch detektiert werden, dass ein zweites drehbares, vom ersten Sensorelement mit einer entsprechenden Untersetzung angetriebenes Sensorelement vorhanden ist. Jeweils bei einer Überschreitung des Drehwinkels von 180° beim ersten Sensorelement ist somit auf einfache Weise ein auswertbares Signal detektierbar und es kann hier eine Wegmessung über eine Drehwinkelmessung in einem großen Wegbereich mit einer hohen Auflösung erreicht werden.

Eine einfache Realisierung dieser zuvor beschriebenen Wegmessung erfolgt in der Weise, dass das erste Sensorelement eine Innenverzahnung aufweist in die eine Außenverzahnung des zweiten Sensorelements einkämmt und dass das Verhältnis der Zähnezahlen beider Verzahnungen bzw. die Durchmesser der beiden Sensorelemente durch den zu detektierenden Weg des mechanischen Bauelements vorgegeben sind.

Für die berührungslose Wegmessung mit der im erfindungsgemäßen Wegsensor eingesetzten Detektionseinrichtung kann eine sichere und redundante Erfassung und Auswertung auch des Absolutwertes des Weges in vorteilhafter Weise unter Erzeugung eines analogen oder digitalisierten Auswertesignals durchgeführt werden. Es können hierzu auch vorhandene Techniken für eine berührungslose hochauflösende Drehwinkelerfassung herangezogen werden.

Beispielhaft ist in dem VDI-Bericht Nr. 509, (VDI-Verlag 1984), Seiten 263 bis 268, im Aufsatz "Neue, alternative Lösungen für Drehzahlsensoren im Kraftfahrzeug auf magnetoresistiver Basis" beschrieben, wie mit magnetischen Sonden als Sensorelemente eine besonders einfache und unempfindliche Drehwinkelerfassung an drehenden Wellen oder Zahnrädern durchführbar ist. Dies ist möglich, weil die Feldlinienrichtung eines im Sensor befindlichen Dauermagneten durch eine rotorische Bewegung veränderbar und detektierbar ist. In der oben genannten, vorbekannten Druckschrift sind sowohl magnetoresistive Dünnschichtsensoren als auch Hallelemente als Detektionseinrichtungen beschrieben, mit denen die Abtastung einer Änderung eines magnetischen Feldes durchgeführt werden kann.

Ein erfindungsgemäßer Wegsensor ist im Anspruch 1 definiert. Andere vorteilhafte Weiterbildungen der Erfindung sind in den abhängigen Ansprüchen 2-8 angegeben. Weiterhim ist der Anspruch 9 auf die Verwendung eines Wegsensors nach Auspruch 1-8 zur Messung des Weges eines Bremspedals gerichlet.

### Zeichnung

Ausführungsbeispiele des erfindungsgemäßen Wegsensors werden anhand der Zeichnung erläutert. Es zeigen:
Figur 1 eine schematische Ansicht auf einen Wegsensor mit einer Drehwinkelerfassung über einen Magneten;
Figur 2 einen Schnitt durch das drehbare Sensorelement nach Figur 1;
Figur 3 eine Ansicht auf ein zweites Ausführungsbeispiel eines Wegsensors für eine Mehrfachumdrehung des Sensorelements und
Figur 4 ein schematische Ansicht auf das Sensorelement nach Schnitt I-II der Figur 3.mit einem zweiten innenliegenden Sensorelement.

### Beschreibung der Ausführungsbeispiele

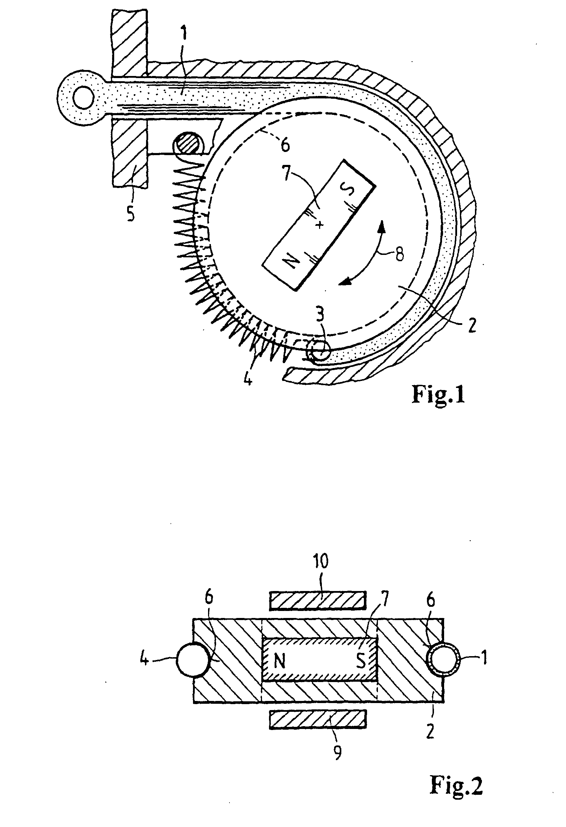

Beim Ausführungsbeispiel eines Wegsensors nach Figur 1 ist ein Bowdenzug 1 mit einem hier nicht dargestellten mechanischen Bauelement, zum Beispiel einem Bremspedal eines Kraftfahrzeuges, gekoppelt. Ein drehbares Sensorelement 2 ist hier ein weiteres Bestandteil der mechanischen Vorrichtung zur Umsetzung einer Längsbewegung des Bowdenzugs 1 in eine Drehbewegung und ist trommelartig zum auf- und abwickeln des Bowdenzugs 1 aufgebaut. Ein Ende 3 des Bowdenzugs 1 ist über eine Spiralfeder 4 am Gehäuse 5 des Wegsensors, in dem auch das Sensorelement 2 drehbar gehalten ist, befestigt. Der Bowdenzug 1 und die Spiralfeder 4 liegen hierbei in einer Nut 6 am Umfang des Sensorelements 2.

Das Sensorelement 2 trägt einen Dauermagneten 7 der seine Lage und damit die Richtung seiner Feldlinien durch eine Drehung (Pfeil 8) des Sensorelements 2 verändert. Aus der Darstellung nach Figur 2 ist die Lage des Dauermagneten 7 zu einer Detektionseinrichtung mit Winkelmesselementen 9 und 10 erkennbar. Diese Winkelmesselemente 9 und 10 können vorzugsweise sogenannte AMR (anisotrop magnetoresisitiv)-Winkelmesselemente, GMR (giant magnetoresistiv) -Winkelmesselemente) oder Hallelemente sein.

Beim Ausführungsbeispiel nach der Figur 1 ist das Bremspedal eines Kraftfahrzeuges bis zum Anschlag durchgetreten und der Bowdenzug 1 ist so weit als möglich aufgewikkelt. Wird das Bremspedal entlastet, so dreht das Sensorelement 2 gegen den Uhrzeigersinn und die Spiralfeder 4 wird dabei gespannt. Der Dauermagnet 7 dreht dabei ebenfalls mit und seine Feldlinien schneiden die statisch am Gehäuse 5 befestigte Detektionseinrichtung in veränderter Weise, so dass die Winkelbewegung erfasst werden kann und am Ausgang der Detektionseinrichtung ein analoges oder gegebenenfalls digitalisiertes Winkelsignal zur Verfügung steht.

Das Ausführungsbeispiel nach den Figuren 1 und 2 erlaubt somit eine Drehwinkelerfassung bis 180°, wobei allerdings durch die Wahl eines geeigneten Durchmessers für das drehbare Sensorelement 2 eine Anpassung auch an größere Weglängen möglich ist.

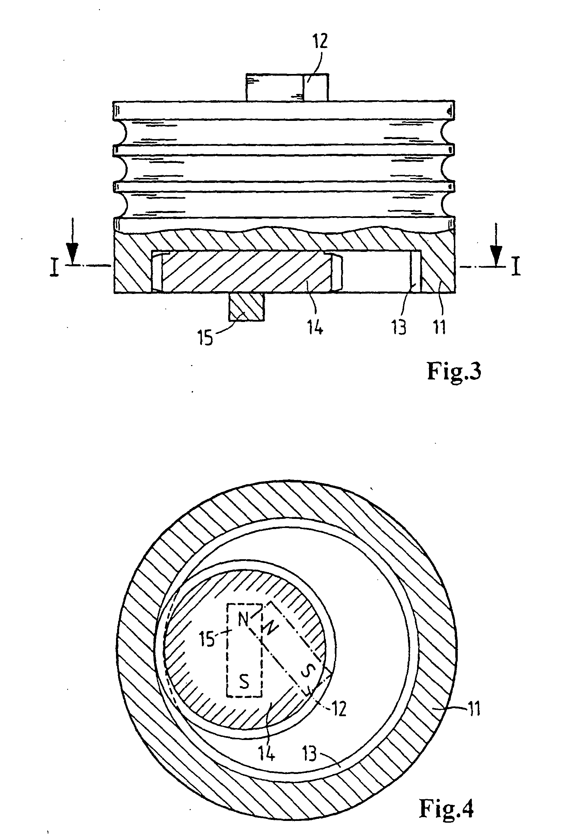

Aus Figur 3 ist eine Ansicht eines zweiten Ausführungsbeispiels zu entnehmen, bei dem ein trommelartiges Sensorelement 11 zum Aufwickeln mehrerer Umschlingungen des Bowdenzugs 1 in Nuten 6 geeignet ist; der Drehwinkeierfassungsbereich ist hier also größer als 180°. Dieses Sensorelement 11 trägt oben, wie beim Ausführungsbeispiel nach Figur 1, einen Dauermagneten 12, der synchron mit der Umdrehung des Sensorelements 11 mitrotiert. Das Sensorelement 11 verfügt über eine Innenverzahnung 13 in die ein Zahnrad 14 als zweites Sensorelement mit kleinerem Durchmesser einkämmt (vgl. auch Figur 4). An diesem kleineren zweiten Sensorelement 14 ist ein mitrotierender Dauermagnet 15 befestigt.

Durch eine geeignete Wahl des Innendurchmessers der Innenverzahnung 13 und des Außendurchmessers des zweiten Sensorelements 14, beziehungsweise durch eine geeignete Wahl des Verhältnisses der Zähnezahlen können somit auch Drehwinkel die 180° überschreiten erfasst werden. Dieses Ausführungsbeispiel besitzt somit zwei Detektionseinrichtungen die anhand der Figur 1 beschrieben sind. Mit diesen Detektionseinrichtungen können somit, ausgehend von einer Betätigung des Bowdenzugs 1, sowohl die absolute Winkelstellung als auch die Winkelüberschreitungen von 180° an den Sensorelementen 2 und 11 und somit die Absolutwerte der zu messenden Wege des Bowdenzugs 1 erfasst werden.

## Patentansprüche

1. Wegsensor, bei dem
- ein absoluter Wert des Weges eines mechanischen Bauelementes oder eine Wegänderung detektierbar und ein entsprechendes elektrisches Ausgangssignal erzeugbar ist,
- eine Längsbewegung des mechanischen Bauelements mit einer mechanischen Vorrichtung (1) in eine Drehbewegung eines Sensorelements (2; 11) umsetzbar ist,
- die mechanische Vorrichtung ein Bowdenzug (1) ist, der mit der Längsbewegung des zu detektierenden mechanischen Bauelements beaufschlagbar ist sowie am Umfang des kreisförmigen Sensorelements (2; 11) gehalten und daran auf- und abwickelbar ist,
- das Sensorelement (2; 11) einen zweipoligen Dauermagneten (7; 12; 15) trägt, dessen Feldlinien in Abhängigkeit von seiner Drehlage eine Detektionseinrichtung (9, 10) in unterschiedlicher Richtung schneiden, so daβ im Betrieb ein ein deutiges Winkelsignal am Ausgang der Detektionseinrichtung (9,10) entsteht.

2. Wegsensor nach Anspruch 1, **dadurch gekennzeichnet, dass**
- der Bowdenzug (1) mit seinem am Sensorelement (2;11) befindlichen Ende (3) über eine Feder (4) am Gehäuse (5) des Wegsensors befestigt ist.

3. Wegsensor nach einem der vorhergehenden Ansprüche, **dadurch gekennzeichnet, dass**
- bei einer detektierbaren Umdrehung des Sensorelements (11) in einem Winkel von größer 180° ein zweites drehbares, vom ersten Sensorelement (11) angetriebenes Sensorelement (14) vorhanden ist, wobei das zweite Sensorelement (14) ebenfalls einen zweipoligen Dauermagneten (15) trägt.

4. Wegsensor nach Anspruch 3, **dadurch gekennzeichnet, dass**
- das erste Sensorelement (11) eine Innenverzahnung (13) aufweist in die eine Außenverzahnung des zweiten Sensorelements (14) einkämmt und dass das Verhältnis der Zähnezahlen beider Verzahnungen durch den zu detektierenden Weg des mechanischen Bauelements und durch die Durchmesser der beiden Sensorelemente (11,14) vorgegeben ist.

5. Wegsensor nach einem der vorhergehenden Ansprüche, **dadurch gekennzeichnet, dass**
- die Detektionseinrichtung mindestens ein anisotropes magnetoresistives Winkelmesselement (9,10) ist.

6. Wegsensor nach einem der Ansprüche 1 bis 4, **dadurch gekennzeichnet, dass**
- die Detektionseinrichtung mindestens ein giant magnetoresistives Winkelmesselement (9,10) ist.

7. Wegsensor nach einem der Ansprüche 1 bis 4, **dadurch gekennzeichnet, dass**
- die Detektionseinrichtung mindestens ein Hall-Winkelmesselement (9,10) ist.

8. Wegsensor nach einem der Ansprüche 5 bis 7, **dadurch gekennzeichnet, dass**
- Winkelmesselemente (9,10) der Detektionseinrichtung jeweils auf beiden Seiten der drehbaren Sensorelemente (2;11) angeordnet sind.

9. Verwendung eines Wegsensors nach einem der vorhergehenden Ansprüche, **dadurch gekennzeichnet, dass**
- der Wegsensor bei der Messung des Weges bei der Betätigung eines Bremspedals in einem Kraftfahrzeug eingesetzt ist.

## Claims

1. Travel sensor, in which
- an absolute value of the travel of a mechanical component or a change in a travel can be detected and an appropriate electric output signal can be generated,
- a longitudinal movement of the mechanical component can be converted by a mechanical device (1) into a rotational movement of a sensor element (2; 11),
- the mechanical device is a Bowden cable (1), to which the longitudinal movement of the mechanical element to be detected can be applied, which is held on the circumference of the circular sensor element (2; 11) and can be wound up thereon and unwound,
- the sensor element (2; 11) bears a two-pole permanent magnet (7; 12; 15), whose field lines intersect a detection device (9, 10) in a different direction, depending on its rotational position, so that during operation an unambiguous angle signal is produced at the output from the detection device (9, 10).

2. Travel sensor according to claim 1, **characterized in that**
- the Bowden cable (1) is fixed by its end (3) at the sensor element (2; 11) to the housing (5) of the travel sensor by means of a spring (4).

3. Travel sensor according to one of the preceding claims, **characterized in that**
- in the event of a detectable rotation of the sensor element (11) in an angle of greater than 180º, there is a second sensor element (14) which is driven by the first sensor element (11), the second sensor element (14) likewise bearing a two-pole permanent magnet (15).

4. Travel sensor according to claim 3, **characterized in that**
- the first sensor element (11) has internal toothing (13) in which external toothing on the second sensor element (14) meshes, and **in that** the ratio of the numbers of teeth on the two toothing systems is predefined by the travel of the mechanical component to be detected and by the diameters of the two sensor elements (11, 14).

5. Travel sensor according to one of the preceding claims, **characterized in that**
- the detection device is at least one anisotropic magnetoresistive angle measuring element (9, 10).

6. Travel sensor according to one of claims 1 to 4, **characterized in that**
- the detection device is at least one giant magnetoresistive angle measuring element (9, 10).

7. Travel sensor according to one of claims 1 to 4, **characterized in that**
- the detection device is at least one Hall angle measuring element (9, 10).

8. Travel sensor according to one of claims 5 to 7, **characterized in that**
- angle measuring elements (9, 10) belonging to the detection device are in each case arranged on both sides of the rotatable sensor element (2; 11).

9. Use of a travel sensor according to one of the preceding claims, **characterized in that**
- the travel sensor is used in measuring the travel when a brake pedal in a motor vehicle is actuated.

## Revendications

1. Capteur de course dans lequel :
- on peut détecter la valeur absolue de la course d'un composant mécanique ou une variation de course et générer un signal de sortie électrique correspondant,
- on convertit un mouvement longitudinal du composant mécanique avec un dispositif mécanique (1) en un mouvement de rotation d'un élément de capteur (2 : 11),
- le dispositif mécanique est un câble Bowden (1) sollicité par le mouvement longitudinal du composant mécanique à détecter et qui est tenu à la périphérie de l'élément capteur de forme circulaire (2, 11) pour s'enrouler sur ou se dérouler de celui-ci,
- l'élément de capteur (2, 11) porte un aimant permanent bipolaire (7, 12, 15) dont les lignes de champ coupent suivant une direction différente une installation de détection (9, 10) en fonction de sa position de rotation de façon qu'en fonctionnement on obtienne un signal angulaire univoque à la sortie de l'installation de détection (9, 10).

2. Capteur de course selon la revendication 1,
**caractérisé en ce que**
le câble Sowden (1) est fixé par son extrémité (3) portée par l'élément de capteur (2: 11) par un ressort (4) au boîtier (5) du capteur de course.

3. Capteur de course selon l'une des revendications précédentes,
**caractérisé en ce que**
pour une rotation délectable de l'élément de capteur (11) dans un angle supérieur à 180° on a un second élément de capteur (14), entraîné, différent du premier élément capteur (11), le second élément capteur (14) portant également un aimant permanent bipolaire.

4. Capteur de course selon la revendication 3,
**caractérisé en ce que**
le premier élément de capteur (11) comporte une denture intérieure (13) qui engrène dans une denture extérieure du second élément de capteur (14) et le rapport des nombres de dents des deux dentures est prédéterminé par la course à détecter du composant mécanique et par le diamètre des deux éléments de capteur (11, 14).

5. Capteur de course selon l'une des revendications précédentes,
**caractérisé en ce que**
l'installation de détection est au moins un élément de mesure d'angle magnétorésistant anisotrope (9, 10).

6. Capteur de course selon l'une des revendications 1 à 4,
**caractérisé en ce que**
l'installation de détection est au moins un élément de mesure d'angle magnétoristant géant (9. 10).

7. Capteur de course selon l'une des revendications 1 à 4,
**caractérisé en ce que**
l'installation de détection est au moins un élément de mesure d'angle à effet Hall (9, 10).

8. Capteur de course selon l'une des revendications 5 à 7,
**caractérisé en ce que**
les éléments de mesure d'angle (9, 10) de l'installation de détection sont prévus sur les deux côtés de l'élément de capteur rotatif (2 ; 11).

9. Application d'un capteur de course selon l'une des revendications précédentes,
**caractérisée en ce qu'**
il est utilisé pour mesurer la course de l'actionnement de la pédale de frein dans un véhicule automobile.
